# EUROPÄISCHE PATENTSCHRIFT

(11) **EP 1 283 966 B1**
(45) Veröffentlichungstag und Bekanntmachung des Hinweises auf die Patenterteilung: **23.02.2005**
(21) Anmeldenummer: 01940508.3
(22) Anmeldetag: 21.05.2001
(51) Int. Cl.: F16K 27/07

(54) **ARMATUR, INSBESONDERE KÜKENHAHN**
FITTING, ESPECIALLY TAP COCK
ROBINET, EN PARTICULIER ROBINET A BOISSEAU

(30) Priorität: 23.05.2000 DE 20009126 U; 24.05.2000 DE 20009184 U
(43) Veröffentlichungstag der Anmeldung: 19.02.2003
(73) Patentinhaber: Xomox International GmbH & Co., 88131 Lindau (DE)
(72) Erfinder: GONSIOR, Wolfgang, 88131 Bodolz (DE)
(74) Vertreter: Schmitt, Meinrad, Dipl.-Ing.
(86) Internationale Anmeldenummer: PCT/EP2001/005772
(87) Internationale Veröffentlichungsnummer: WO 2001/090620

(56) Entgegenhaltungen:
- FR-A- 2 803 834
- US-A- 3 286 735
- US-A- 3 442 490
- US-A- 3 554 488
- US-A- 3 999 567
- US-A- 4 318 531
- US-A- 4 422 473
- US-A- 5 445 187

## Beschreibung

Die Erfindung bezieht sich auf eine Armatur für Behälter wie Tankwagen oder Container gemäß den im Oberbegriff des Patentanspruchs 1 angegebenen Merkmalen.

Aus der US 3 286 735 A ist eine derartige Armatur bekannt, deren Drehkörper im wesentlichen kugelförmig ausgebildet ist und welche im Bereich einer Öffnung im Boden des Behälters eines Tankfahrzeugs angeordnet ist. Mit dem kugelförmigen Drehkörper ist eine Welle gekoppelt, welche sich nach dem Einbau der Armatur in den Behälter in dessen Innenraum befindet, wobei die Armatur eine vergleichsweise große Höhe aufweist. Zur Abdichtung sind im Bereich der Einlassöffnungen Sitzringe vorgesehen, welche an der kugelförmigen Außenfläche des Drehkörpers anliegen und mittels einstellbaren ringförmigen Hülsen im Gehäuse festgelegt sind. Zur Vorgabe bzw. Einstellung der Dichtkraft der Sitzringe sind die genannten Hülsen im Gehäuse über Gewindeverbindungen drehbar gelagert, wobei zur Erhöhung der Dichtkraft die genannten Hülsen unabhängig voneinander von beiden Seiten bezüglich des Drehkörpers in entgegengesetzten Richtungen zu bewegen sind. Nach dem Einbau der Armatur in den Behälter ist die Einstellung im Innenraum des Behälters durchführbar, oder aber die Armatur muss aus dem Behälter ausgebaut werden.

Ferner ist aus der US 4 518 149 A eine Armatur bekannt, deren Drehkörper als Küken ausgebildet ist und um eine im wesentlichen horizontale Drehachse drehbar und im Gehäuse mittels einer Büchse aus Kunststoff, insbesondere Polytetrafluorethylen (PTFE), gelagert, wobei mittels der Büchse ferner die Abdichtung bezüglich des Gehäuses vorgegeben ist. In einer ersten Ausführungsform ist die Armatur als ein Kükenhahn ausgebildet, dessen Gehäuse einen im wesentlichen vertikal angeordneten Durchgang mit einer Einlassöffnung und einer Auslassöffnung aufweist. Das Küken weist eine Durchgangsbohrung mit einer Einströmöffnung und einer Ausströmöffnung auf, welche in der Offenstellung mit der Einlassöffnung und der Auslassöffnung des Gehäuses fluchten. Der Querschnitt der Durchgangsbohrung des Kükens und der Auslassöffnung des Gehäuses sind kleiner als der Querschnitt eines Anschlussstutzens für eine Leitung oder einen Schlauch zum Beladen oder Befüllen. In Folge der genannten Querschnittsreduzierung müssen relativ lange Zeiten zum Beladen und Entladen bzw. zum Befüllen oder Entleeren des Tankbehälters in Kauf genommen werden. Es sei an dieser Stelle festgehalten, dass beim Entladen oder Entleeren das Fluid oder im Behälter gespeicherte Medium durch die Einlassöffnung des Gehäuses und die Einströmöffnung des Drehkörpers einströmt und durch die Ausströmöffnung des Drehkörpers und die Auslassöffnung des Gehäuses ausströmt. Hingegen ist im Falle des Beladens oder Befüllens die Strömungsrichtung umgekehrt, so dass das Medium oder Fluid durch die Auslassöffnung und die Ausströmöffnung einströmt und durch die Einströmöffnung des Drehkörpers und die Einlassöffnung des Gehäuses in den Behälter gelangt. Ferner enthält das Küken eine kleine seitliche Öffnung, welche in der Offenstellung sich im Bereich der innenliegenden Bodenfläche des Behälters befindet, um dessen vollständige Entleerung zu ermöglichen. Die Durchflussmenge wird durch diese kleine Öffnung jedoch nicht beeinflusst. Durch Vergrößerung des Durchmessers des Kükens könnte dem durch die Querschnittsreduzierung bedingten Mangel zwar entgegengewirkt werden, doch würde hierdurch das Bauvolumen und insbesondere die Bauhöhe der Armatur in nachteiliger Weise vergrößert. In einer weiteren Ausführungsform ist der Drehkörper als eine Kugel mit einem entsprechend vergrößerten Querschnitt der Durchgangsbohrung ausgebildet. Das Bauvolumen und vor allem die Bauhöhe, und zwar in vertikaler Richtung bzw. in Richtung der Durchgangsöffnung des Gehäuses, ist bei dieser Ausführungsform jedoch beträchtlich. Ferner ist die Einstellung und/oder die Nachstellung des Abpressdrucks von Dichtelementen und somit der Dichtkraft auf den als Kugel ausgebildeten Drehkörper im montierten Zustand der Armatur mit einem erheblichen Aufwand verbunden, da diese Maßnahmen im Innenraum des Tanks durchzuführen sind.

Hiervon ausgehend liegt der Erfindung die Aufgabe zugrunde, die Armatur der genannten Art mit einem geringen konstruktiven Aufwand dahingehend weiterzubilden und zu optimierten, dass bei einem geringen Bauvolumen und / oder einer geringen Bauhöhe die Einstellung der Dichtkraft der Sitzringe in einfacher Weise durchführbar ist, wobei ferner ein geringes Betätigungsmoment zum Drehen des Drehkörpers erforderlich sein soll.

Die Lösung dieser Aufgabe erfolgt gemäß den im Anspruch 1 angegebenen Merkmalen.

Die erfindungsgemäße Armatur, welche als ein Kükenhahn ausgebildet ist, zeichnet sich durch eine einfache und gleichwohl funktionssichere Konstruktion aus und gewährleistet in der Offenstellung des Drehkörpers einen großen Durchlass des Mediums und somit kurze Beladezeiten und / oder Entladezeiten. Die Querschnitte der genannten Öffnungen des Gehäuses und des Drehkörpers sind derart vorgegeben und auf den Querschnitt des Anschlussflansches abgestimmt, dass beim Beladen und Entladen ein ungehinderter freier Durchfluss des Mediums oder Fluids ohne eine nachteilige Querschnittsreduzierung erfolgt. Der Drehkörper enthält eine zweite Einlassöffnung mit einem vergleichsweise großen Querschnitt, durch welche ein wesentlicher Anteil des durch den Drehkörper strömenden Mediums in der Offenstellung des Drehkörpers hindurchströmt. Der Querschnitt der zweiten Einströmöffnung ist im wesentlichen zumindest gleich groß wie der Querschnitt der ersten Einströmöffnung. Des weiteren ist in bevorzugter Weise der Querschnitt mit der Auslassöffnung des Gehäuses zumindest näherungsweise gleich groß wie der Querschnitt der Öffnung des Anschlussflansches. Ferner enthält das Gehäuse einen zumindest in der Offen-Position des Drehkörpers zur genannten zweiten Einströmöffnung einen im wesentlichen koaxialen Lagerring oder Dichtring. In einer besonderen Ausgestaltung enthält das Gehäuse im Bereich der Ausströmöffnung des Drehkörpers auslaufseitig bzw. zur Außenseite des Behälters hin einen Sitzring und/oder einen Dichtring, aufgrund dessen ein geringes Betätigungsmoment bzw. ein geringes Drehmoment zum Drehen des Drehkörpers beim Öffnen oder Schließen gewährleistet ist. Dies gilt insbesondere im Vergleich mit einem Kükenhahn, dessen Küken in einer Büchse des Gehäuses drehbar und dichtend gelagert ist. In einer weiteren Ausgestaltung sind die beiden Einströmöffnungen des Drehkörpers diametral und bevorzugt koaxial zueinander angeordnet, ebenso wie die beiden zugeordneten Einlassöffnungen des Gehäuses, wobei die jeweiligen Querschnitte der Öffnungen im wesentlichen gleich groß sind. Hierbei liegen die Achsen der genannten Öffnungen im wesentlichen orthogonal zur Drehachse des bevorzugt als Küken ausgebildeten Drehkörpers, wobei den beiden Einströmöffnungen des Drehkörpers jeweils ein im Gehäuse angeordneter Sitzring zugeordnet ist. Bei allen Ausführungsformen der erfindungsgemäßen Armatur erfolgt die Einstellung der Dichtkräfte der Sitzringe und Dichtelemente im Bereich der Außenseite des Behälters, so dass im montierten Zustand der Armatur jederzeit bei Bedarf eine Einstellung oder Nachstellung ohne weiteres durchführbar ist.

Zur Erfüllung der Sicherheitsanforderungen sind einem zur Betätigung des Drehkörpers vorgesehenen Hebel und/oder einem ablaufseitig bzw. im Bereich der Außenseite des Behälters angeordneten Flansch oder dergleichen Sollbruchstellen zugeordnet, so dass im Falle eines eventuellen Unfalls die Armatur unbeschädigt und somit voll funktionsfähig und dicht bleibt. Die erfindungsgemäße Armatur ermöglicht eine direkte und sichere Montage sowie Betätigung direkt im Behälter. Ferner zeichnet sich die Armatur durch eine hohe Wirtschaftlichkeit aus, da vergleichsweise wenige Bauteile erforderlich sind. Von besonderer Bedeutung ist ferner eine geringe Einbauhöhe, wobei gleichwohl ein hoher Durchlass des in dem Behälter zu füllenden oder aus dem Behälter zu entleerenden Mediums gewährleistet ist. Durch Einsatz standardisierter Bauteile und Komponenten wird ferner hohen Anforderungen an die Qualität und die Funktionssicherheit entsprochen. In bevorzugter Weise ist die Armatur in einen Mannlochdeckel integriert und kann in einfacher Weise mit dem Behälter, insbesondere durch Schweißen verbunden werden.

Weiterbildungen und besondere Ausgestaltungen sind in den Unteransprüchen sowie der weiteren Beschreibung angegeben.

Die Erfindung wird nachfolgend anhand besonderer Ausführungsbeispiele näher erläutert, ohne dass insoweit eine Beschränkung erfolgt. Es zeigen:
- Fig. 1: einen Schnitt durch ein erstes Ausführungsbeispiel, wobei der Drehkörper in der offenen Position bzw. bei freigegebenem Durchlass dargestellt ist,
- Fig. 2,3: Ansichten der Armatur gemäß Fig. 1,
- Fig. 4: einen Schnitt durch ein weiteres Ausführungsbeispiel,
- Fig. 5: eine Ansicht der Armatur gemäß Fig. 4,
- Fig. 6: einen Schnitt durch die Armatur entlang Schnittebene A gemäß Fig. 4,
- Fig. 7: eine vergrößerte Detaildarstellung X gemäß Fig. 6,
- Fig. 8: eine perspektivische Darstellung der Armatur gemäß Fig. 4 bis 7.

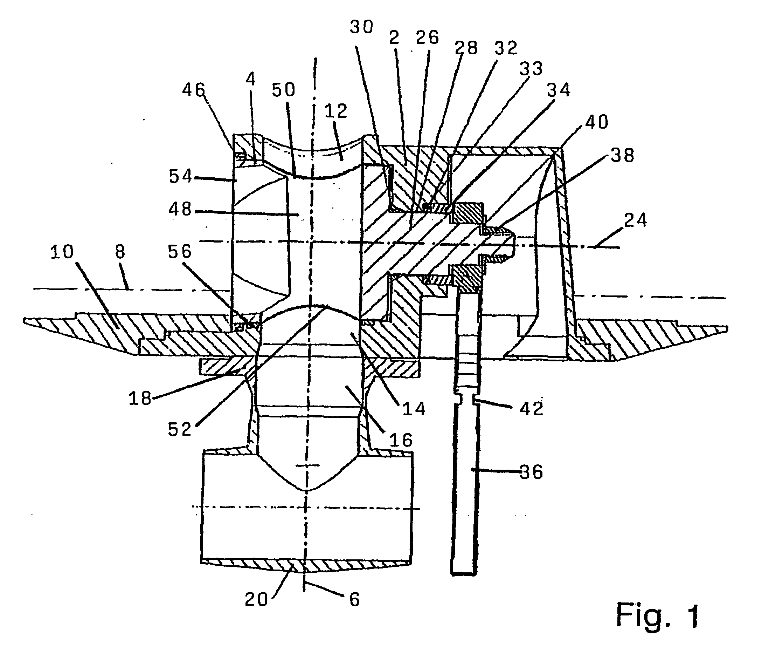

Fig. 1 zeigt einen Schnitt durch die Armatur mit einem Gehäuse 2 und einem Drehkörper 4, und zwar in einer Schnittebene durch die Längsachse 6. Die Armatur ist im Bereich einer Öffnung im Boden, welcher mit strichpunktierter Linie 8 angedeutet ist, eines Behälters oder Tanks angeordnet und mit diesem in geeigneter Weise dicht und fest verbunden. Hierzu ist zweckmäßig in einem Mannloch des Bodens 8 ein Einschweißdeckel 10 vorgesehen, mit welchem das Gehäuse zweckmäßig über einen Flansch verbunden ist. Im Inneren des Behälters, also oberhalb des Bodens 8, befindet sich eine zur Längsachse 6 koaxiale Einlassöffnung 12. Ferner enthält das Gehäuse 2 unten, zur Außenseite hin, eine Auslassöffnung 14, an welche ein Durchgang 16 eines Anschlusskörpers eines Anschlussflansches oder Anschlussstutzens, anschließt. Mit dem Anschlusskörper 18 ist ferner ein T-Stück 20 verbunden. Der Querschnitt der Auslassöffnung 14 ist zumindest näherungsweise gleich groß wie der Querschnitt des Durchgangs 16, ohne dass eine Querschnittsreduzierung vorhanden ist.

Im Gehäuse 2 ist der als Küken ausgebildete Drehkörper 4 um eine zur bevorzugt vertikal angeordneten Längsachse 6 zumindest näherungsweise orthogonale Drehachse 24 drehbar gelagert. Wie ersichtlich, durchdringt ein Schaft 26 des Drehkörpers 4 eine Bohrung 28 des Gehäuses, wobei über den einteilig mit dem Drehkörper verbundenen Schaft 26 eine Lagerung des Drehkörpers 4 vorgegeben ist. Im Übergangsbereich des Drehkörpers 4 zum Schaft 26 ist ein Deltaring 30 vorgesehen, welcher teilweise in die genannte Bohrung 28 hineinragt. Mittels Stopfbuchsringen 32, 33 erfolgt die Abdichtung zur Außenseite hin, wobei eine axiale Druckbeaufschlagung über einen Druckring 34 vorgesehen ist. Mit dem Schaft 26 ist ferner zur Betätigung ein Hebel 36 drehfest verbunden, wobei mittels Einstellmitteln 38, in Form einer Nachstellmutter, und eine Scheibe 40 über den Hebel und den Druckring 34 die Stopfbuchsringe 32, 33 eingestellt bzw. nachgestellt werden können. Der Hebel 36 weist ferner eine Sollbruchstelle 42 auf, welche möglichst nahe des Einschweißdeckels 10 bzw. des Tankbodens 8 vorgesehen ist. Auch die Verbindung des Anschlusskörpers 18, insbesondere mittels hier nicht weiter dargestellten Schrauben, mit dem Gehäuse 2 ist vorteilhaft als Sollbruchstelle ausgebildet, so dass bei einem eventuellen Unfall die Armatur nicht beschädigt wird und voll funktionsfähig und dicht bleibt.

Das eine konische Außenfläche aufweisende Küken 4 ist in einer gleichfalls konischen Bohrung 44 des Gehäuses 2 angeordnet, und mittels eines Lagerringes 46 gelagert. Eine üblicherweise bei Kükenhähnen vorgesehene Büchse zur Lagerung und Dichtung ist nicht vorhanden. Vielmehr ist zwischen der konischen Außenfläche des Kükens 4 und der Innenfläche der konischen Bohrung 44 ein Spiel bzw. ein vorgegebener kleiner Ringspalt vorhanden, und infolgedessen sind zur Betätigung bzw. Drehung des Kükens 4 insoweit keine Reibkräfte bzw. Drehmomente zu überwinden. Die Lagerung des Kükens 4 erfolgt einerseits mittels des Lagerringes 46 und andererseits mittels der Lagerung des einteilig verbundenen Schaftes 26 im Bereich der Bohrung 28 des Gehäuses 2. Im Vergleich mit bekannten Kükenhähnen wird somit ein geringes Betätigungsmoment gewährleistet.

Der Drehkörper 4 enthält eine Durchgangsbohrung 48 mit einer ersten Einströmöffnung 50 und diametral hierzu eine Ausströmöffnung 52. Ferner enthält der Drehkörper 4 eine zweite Einströmöffnung 54, welche in die Durchgangsbohrung 48 mündet und welche zumindest näherungsweise koaxial zur Drehachse 24 angeordnet ist. Wie ersichtlich, ist im Bereich der zweiten Einströmöffnung 54 radial außen im Gehäuse 2 der gleichfalls zur Drehachse 24 im wesentlichen koaxiale Lagerring 46 angeordnet. Die zweite Einströmöffnung 54 bildet eine direkte Verbindung zwischen dem Innenraum des Behälters und der Durchgangsbohrung 48 des Drehkörpers 4. Beim Entladen oder Entleeren des Behälters strömt somit das Medium nicht nur durch die erste Einströmöffnung 50, sondern gleichzeitig auch durch die zweite Einströmöffnung 54 in die Durchgangsbohrung 48 des Drehkörpers 4. Der Querschnitt der zweiten Einströmöffnung 54 ist groß vorgegeben und liegt zumindest näherungsweise in der gleichen Größenordnung wie der Querschnitt der ersten Einströmöffnung 50. Aufgrund der großen Querschnittsfläche der Einströmöffnung 54 strömt durch diese somit ein wesentlicher Anteil des Mediums. Der Strömungswiderstand für das den Drehkörper 4 und insgesamt die Armatur durchströmende Medium ist somit auf ein Minimum reduziert.

Zur Abdichtung in der Schließ-Position, in welcher der Drehkörper bzw. das Küken 4 um 90° um die Drehachse 24 gedreht ist, ist im Bereich der Auslassöffnung 14 des Gehäuses 2 ein bevorzugt weich dichtender Sitzring oder Dichtring 56 vorgesehen, welcher an der konischen Außenfläche des Kükens 4 dichtend anliegt, und aus Kunststoff, insbesondere PTFE, besteht. Der weich dichtende Sitzring 56 ist im Bereich der konischen Innenfläche 28 des Gehäuses 2 angeordnet und entsprechend konisch bzw. sphärisch verformt. Es sei angemerkt, dass in der Offen-Position die Durchgangsbohrung 48 und die Ausströmöffnung 50 des Drehkörpers 4 koaxial zur Längsachse 6 und der Auslassöffnung 14 liegen, während in der Schließ-Position die Durchgangsbohrung 48 und die Ausströmöffnung 50 eine bezüglich der Drehachse 24 um etwa 90° gedrehte Position einnehmen und der Sitzring 54 an dem zugeordneten, völlig geschlossenen Teil der Außenfläche des Drehkörpers 4 dichtend anliegt. Die konische Bohrung 44 des Gehäuses 2 öffnet sich von dem gemäß Zeichnung rechten Teil des Gehäuses 2 bzw. der Bohrung 28 in Richtung zur Längsachse 6 bzw. zum gegenüberliegenden Lagerring 46 und mündet dort in den Innenraum des Behälters. Entsprechend weist der Drehkörper 4 eine sich vom Bereich des Schaftes 26 zum freien Ende des Drehkörpers 4 sich öffnende konische Außenfläche auf. Durch Festziehen der insbesondere als Nachstellmutter 38 ausgebildeten Einstellmittel wird der Drehkörper gemäß Zeichnung bezüglich des Gehäuses 2 nach rechts bzw. in die Bohrung 44 hineingezogen, wobei der Anpressdruck und letztendlich die Dichtkraft des Sitzringes 56 in der erforderlichen Weise vorgegeben und eingestellt wird. Da die Einstellmittel bzw. die Nachstelimutter 38 von der Außenseite des Behälters her zugänglich ist, kann die Einstellung und/oder Nachstellung der Dichtkraft des Sitzringes 56 problemlos im montierten und fest mit dem Behälter verbundenen Zustand der Armatur durchgeführt werden. Bei der genannten Einstellung erfolgt ferner auch die Einstellung und Vorgabe der Dichtkraft der Stopfbuchsringe 32, 33 bezüglich des Schaftes 26.

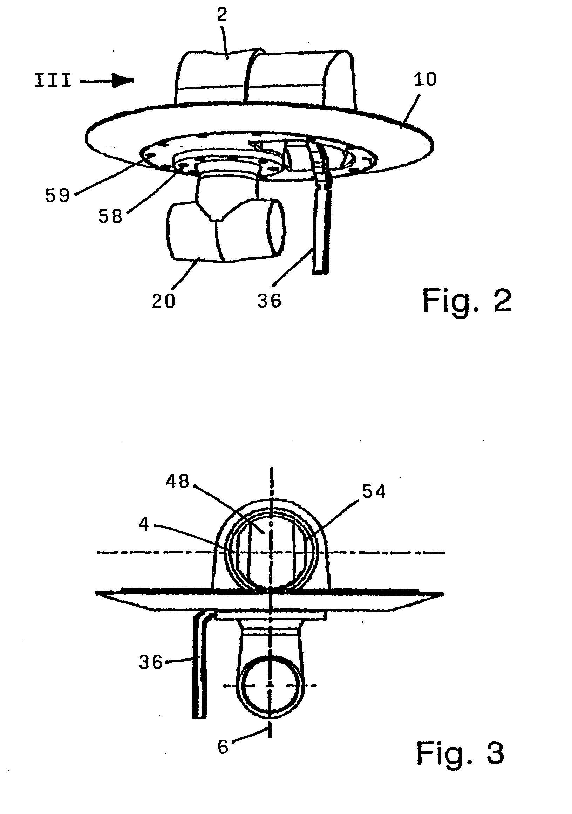

Fig. 2 zeigt in einer perspektivischen Darstellung die Armatur schräg von unten mit dem T-Stück 20 und dem Betätigungshebel 36. Wie ersichtlich, ist der Anschlussflansch 18 mittels Schrauben 58 mit dem unteren Flansch des Gehäuses 2 verbunden. Der untere Gehäuseflansch ist gleichfalls mittels Schrauben 59 mit dem Einschweißdeckel 10 verbunden.

Fig. 3 zeigt eine seitliche Ansicht der Armatur in Blickrichtung III gemäß Fig. 2, wobei der Drehkörper 4 in der Durchgangsposition dargestellt ist und somit die Durchgangsbohrung 48 koaxial zur Längsachse 6 verläuft. Auch die große zweite Einströmöffnung 54 ist hier gut zu erkennen.

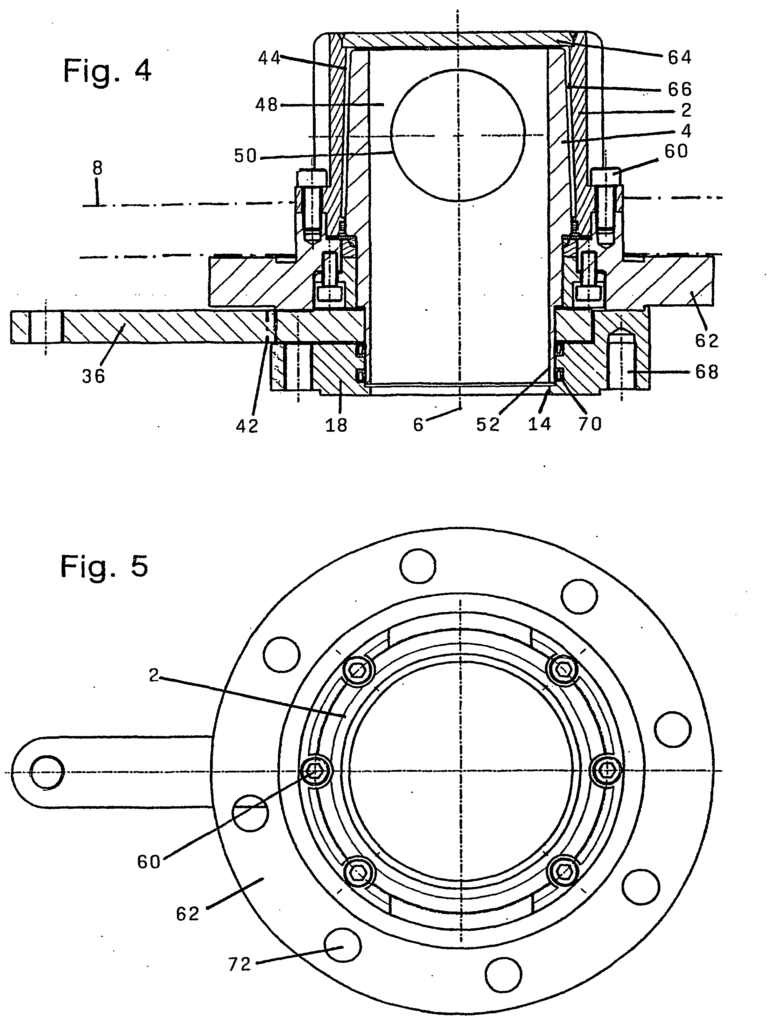

Fig. 4 zeigt eine besondere Ausgestaltung der wiederum als Kükenhahn ausgebildeten Armatur, deren Drehkörper bzw. Küken 4 um die Längsachse 6 drehbar ist, welche somit gleichzeitig auch die Drehachse bildet. Das teilweise in den Innenraum des Behälters mit dem Boden 8 hineinragende Gehäuse 2 enthält ein mittels Schrauben 60 verbundenes Unterteil 62 mit einem Flansch zur Verbindung mit dem Boden 8 und ferner oben einen Deckel 64. Zur Betätigung bzw. zum Drehen des Drehkörpers 4 ist mit diesem der Hebel 36 drehfest verbunden, welcher die mit strichpunktierter Linie angedeutete Sollbruchstelle 42 aufweist. Das Gehäuse 2 enthält innen die konische Bohrung 44, deren Konuswinkel sich nach unten bzw. in Richtung zum Unterteil 62 und/oder zum Hebel 36 öffnet. Entsprechendes gilt auch für die konische Außenfläche des Kükens 4, wobei der konische Ringspalt 66 zwischen dem Küken 4 und dem Gehäuse 2 hier gut zu erkennen ist. Eine Büchse zur Lagerung und/oder Abdichtung im Bereich des konischen Ringspaltes 66 ist auch bei dieser Ausführungsform nicht vorhanden. Mit dem Unterteil 62, welches zweckmäßig als Gehäuseflansch ausgebildet ist, ist an der Unterseite der Anschlusskörper 18 angeordnet, welcher bevorzugt als Rohrflansch ausgebildet ist und in zweckmäßiger Weise Gewindebohrungen 68 zur Verbindung mit einem entsprechend ausgebildeten Flansch eine Rohrleitung oder dergleichen enthält. Der Drehkörper 4 ragt bis in den Bereich des Anschlusskörpers 18 und mittels wenigstens eines, zweckmäßig zwei Dichtungsringen 70, welche insbesondere als Deltaringe ausgebildet sind, erfolgt die Abdichtung nach außen. Der Drehkörper 4 enthält die erste Einströmöffnung 50 und diametral zu dieser ist vor der Zeichenebene die zweite Einströmöffnung vorgesehen. Die beiden Einströmöffnungen münden in den innenliegenden Durchgang 48 des Drehkörpers 4, wobei der Durchgang 48 bevorzugt als Durchgangsbohrung ausgebildet ist und unten die Ausströmöffnung 52 aufweist, deren Querschnittsfläche bzw. Radius im wesentlichen gleich groß ist wie in der Auslassöffnung 14 im Anschlusskörper 18 des Gehäuses 2.

Fig. 5 zeigt eine Aufsicht auf die Armatur mit dem Gehäuse 2, welches mittels der Schrauben 60 mit dem Unterteil 62 verbunden ist. Das Unterteil 62 ist als Gehäuseflansch ausgebildet und enthält Durchgangsbohrungen 72 zur Verbindung mit dem Boden des Behälters.

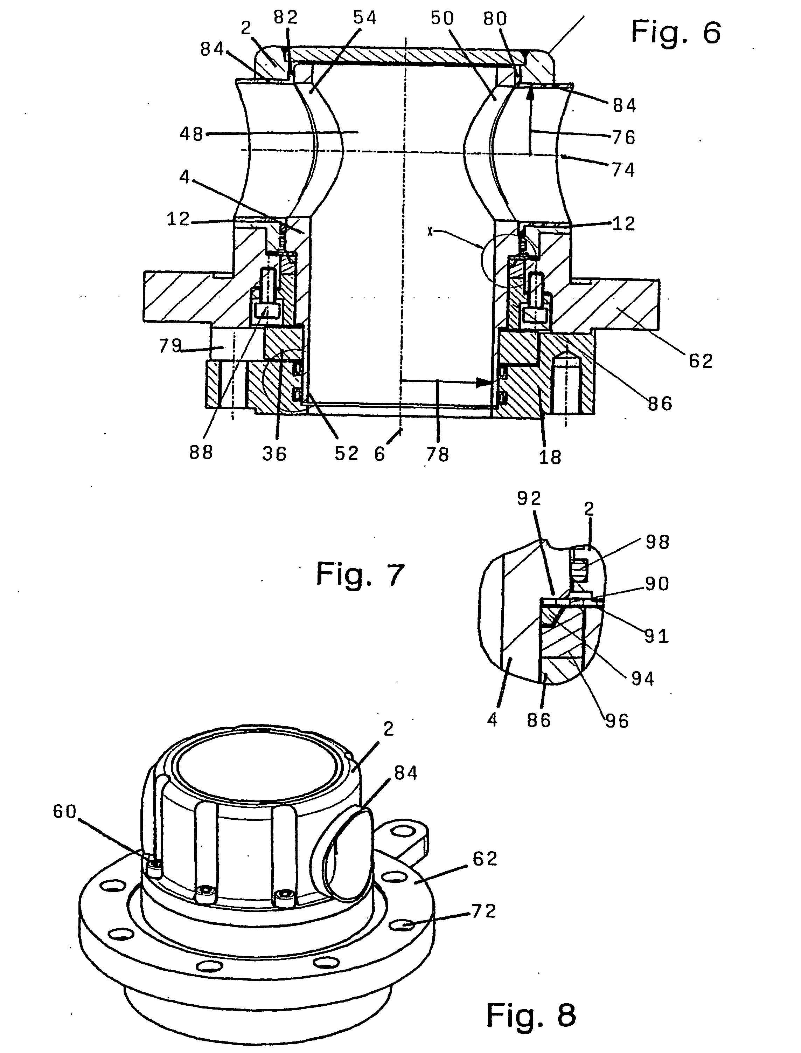

Fig. 6 zeigt einen Schnitt durch die Armatur gemäß Fig. 4 in einer um 90° bezüglich der Längsachse 6 gedrehten Position. Hierbei sind sowohl die erste Einströmöffnung 52 als auch die zweite Einströmöffnung 54 des Drehkörpers 4 gut zu erkennen. Die beiden Einströmöffnungen 50, 54 sind diametral angeordnet und liegen koaxial bezüglich einer gemeinsamen Achse 74, welche im wesentlichen orthogonal zur Längsachse 6 verläuft. Die beiden Einströmöffnungen 50, 54 sind zweckmäßig Bestandteil einer Durchgangsbohrung durch den Drehkörper 4 quer zu dessen Dreh- und Längsachse 6. Die beiden Einströmöffnungen 50, 54 weisen zweckmäßig gleichgroße Radien 76 auf und die Ausströmöffnung 52 besitzt einen Radius 78. Die Radien 76 einerseits und der Radius 78 andererseits sind derart vorgegeben, dass die Summe der Querschnittsflächen der beiden Einströmöffnungen 50, 54 zumindest näherungsweise gleichgroß ist wie die Querschnittsfläche der Ausströmöffnung 52 und/oder des Durchgangs 48, welcher insbesondere als Durchgangsbohrung ausgebildet ist. In der Offen-Position kann somit das Fluid oder Medium ungehindert und ohne Querschnittsreduzierung den Drehkörper 4 und insgesamt die Armatur durchströmen. Da die Radien 76 der querliegenden Einströmöffnungen 50, 54 somit vergleichsweise klein vorgegeben sind, ist die Bauhöhe, und zwar in Richtung der Längsachse 6 der Armatur, entsprechend gering vorgegeben. Zwischen dem Unterteil 62 und dem Anschlusskörper 18 ist ein Freiraum 79 zur Aufnahme des Hebels 36 vorgesehen.

In der Schließ-Position des Drehkörpers 4, welcher hierbei gegenüber der in Fig. 6 dargestellten Offen-Position eine um 90° bezüglich der Dreh- und Längsachse 6 gedrehte Position einnimmt, ist zur Abdichtung zwischen dem Drehkörper 4 und dem Gehäuse 2 im Bereich des genannten konischen Ringspalts jeweils ein bevorzugt weich dichtender Sitzring 80, 82 angeordnet. Die beiden Sitzringe 80, 82 sind entsprechend der konischen Außenfläche des Drehkörpers 4 konisch und/oder sphärisch gekrümmt im Bereich der Innenfläche des Gehäuses 2 angeordnet. Die Sitzringe 80, 82 sind jeweils Bestandteil bevorzugt zylindrischer Buchsen 84, welche in die zur Drehachse 6 querliegende und diametral angeordnete Einlassöffnungen 12 eingesetzt sind. Durch die Integration der Sitzringe 80, 82 in die jeweilige Buchse 84 und deren Festlegung in den diametralen Einlassöffnungen 12 ist eine sichere Fixierung im Gehäuse 2 gewährleistet. Die Fertigung und der Einbau der in die beiden Buchsen 84 integrierten Sitzringe 80, 82 ist somit in einfacher Weise durchführbar. Es ist von besonderer Bedeutung, dass die Radien der Einlassöffnungen 12 und/oder der Innenflächen der Buchsen 84 zumindest näherungsweise gleichgroß sind wie die Radien 76 der zugeordneten Einströmöffnungen 50, 54. Da somit die entsprechenden Querschnittsflächen im wesentlichen übereinstimmen, ist keine Querschnittsreduzierung und/oder eine Erhöhung des Strömungswiderstandes gegeben. Die Sitzringe 80, 82 samt zugehörenden Buchsen 84 bestehen wiederum aus Kunststoff, wie insbesondere PTFE.

Im Gehäuse bzw. dessen Unterteil oder Gehäuseflansch 62 ist ferner ein Druckring 86 vorgesehen, welcher mittels Schrauben 88 festgelegt ist. Der Druckring 86 ist koaxial zur Achse 6 angeordnet und dient bevorzugt auch zur Lagerung des Drehkörpers 4.

Fig .7 zeigt vergrößert das Detail X gemäß Fig. 6, wobei der Drehkörper 4 und der Druckring 86, das Gehäuse und dessen Unterteil 62 teilweise dargestellt sind. Zwischen dem Gehäuse 2 und dem Unterteil 62 sind Membranen 90, 91 eingespannt. Die Membran 90 ist weichdichtend ausgebildet und besteht aus Kunststoff, insbesondere PTFE, während die Membran 91 als eine Stahlmembran ausgebildet ist. Die Membranen 90, 91 sind ringförmig ausgebildet und liegen mit einem radial innenliegenden Rand auf einer Ringschulter des Drehkörpers auf. Auf der anderen Seite des genannten Randes der Membrane 90 liegt ein Dichtring 94 auf, der bevorzugt als Deltaring ausgebildet ist und ferner an der Außenfläche des Drehkörpers 4 dichtend anliegt. Axial zwischen dem Druckring 86 und der Membrane 90 ist ferner ein bevorzugt ringförmiger Druckkörper 96 angeordnet. Ferner ist zwischen dem Drehkörper 4 und dem Gehäuse 2 ein Dichtring 98 angeordnet, welcher bevorzugt als ein U-Ring ausgebildet ist. In Verbindung mit Fig. 6 ist ersichtlich, dass mittels der Schrauben 88 der Druckring 86 axial einstellbar und folglich über den Druckkörper 96 und die Membrane 90 die axiale Einstellung des Drehkörpers 4 und letztendlich die Verpressung und/oder Dichtkraft der Sitzringe 80, 82 vorgebbar ist. Die erläuterte Einstellung kann problemlos auch bei der in den Behälter eingebauten Armatur von der Außenseite her erfolgen.

Schließlich zeigt Fig. 8 eine perspektivische Darstellung der Armatur gemäß Fig. 4 bis 7 mit dem Gehäuse 2 und der einen Buchse 84. Mittels der Schrauben 60 ist das Gehäuse 2 mit dem Unterteil oder Gewindeflansch 62 verbunden, welcher die Durchgangsbohrungen 72 zur Befestigung an der Außenseite des Bodens des Behälters enthält.

### Bezugszeichen

- 2: Gehäuse
- 4: Drehkörper / Küken
- 6: Längsachse
- 8: Boden / Behälter
- 10: Einschweißdeckel
- 12: Einlassöffnung von 2
- 14: Austassöffnung von 2
- 16: Durchgang von 18
- 18: Anschlusskörper
- 20: T-Stück
- 24: Drehachse
- 26: Schaft von 4
- 28: Bohrung in 2
- 30: Deltaring
- 32, 33: Stopfbuchsring
- 34: Druckring
- 36: Hebel
- 38: Einstellmittel / Einstellmutter
- 40: Scheibe
- 42: Sollbruchstelle in 36
- 44: konische Bohrung in 2
- 46: Lagerring
- 48: Durchgangsbohrung in 4
- 50: erste Einströmöffnung
- 52: Ausströmöffnung von 4
- 54: zweite Einströmöffnung von 4
- 56: Sitzring
- 58-60: Schraube
- 62: Unterteil von 2
- 64: Deckel von 2
- 66: konischer Ringspalt
- 68: Gewindebohrung in 18
- 70: Dichtungsring / Deltaring
- 72: Durchgangsbohrung in 62
- 74: Achse von 50, 54
- 76: Radius von 50, 54
- 78: Radius von 52
- 79: Freiraum
- 80,82: Sitzring
- 84: Buchse
- 86: Druckring
- 88: Schraube
- 90: Membrane
- 92: Ringschulter von 4
- 94: Dichtring
- 96: Druckkörper
- 98: Dichtring / O-Ring

## Patentansprüche

1. Armatur für Behälter wie Tankwagen oder Container, enthaltend ein Gehäuse (2), weiches zwei Einlassöffnungen (12) und eine Auslassöffnung (14) aufweist, sowie einen Drehkörper (4) mit einem Durchgang (48), welcher zwei Einströmöffnungen (50, 54) und eine Ausströmöffnung (52) aufweist, wobei der Drehkörper (4) im Gehäuse (2) drehbar angeordnet ist, um die Verbindung zwischen den Einlassöffnungen (12) und der Auslassöffnung (14) in einer Offen-Position frei zu geben oder in einer Schließ-Position abzusperren, wobei ferner die Querschnitte der beiden Einströmöffnungen (50, 54) zumindest näherungsweise gleich groß sind und das Gehäuse (2) entweder im Bereich der zweiten Einströmöffnung (54) einen Lagerring (46) oder im Bereich der zweiten Einlassöffnung (12) einen Sitzring (82) aufweist,
**dadurch gekennzeichnet, dass** der Drehkörper (4) als Küken mit einer konischen Außenfläche ausgebildet ist, wobei zwischen dieser und der zugeordneten konischen Innenfläche einer Bohrung (44) des Gehäuses (2) ein vorgegebener kleiner Ringspalt (66) vorhanden ist,
dass das Gehäuse (2) entweder, und zwar im Falle des Lagerrings (46) im Bereich der zweiten Einströmöffnung (54), im Bereich der Auslassöffnung (14) einen Sitzring (56) aufweist, an welchem der Drehkörper (4) mit seiner konischen Außenfläche dichtend anliegt, oder das Gehäuse (2), und zwar im Falle des Sitzringes (82) im Bereich der zweiten Einlaßöffnung (12), ferner im Bereich der ersten Einlassöffnung (12) ebenfalls einen Sitzring (80) aufweist, wobei an den genannten beiden Sitzringen (80, 82) der Drehkörper (4) mit seiner konischen Außenfläche dichtend anliegt,
und dass ferner über einen Druckring (34, 86) die axiale Einstellung des Drehkörpers (4) und somit die Einstellung der Dichtkraft der Sitzringe (56; 80, 82) vorgebbar ist, wobei nach dem Einbau der Armatur in den Behälter die genannte Einstellung im Bereich der Außenseite des Behälters durchführbar ist.

2. Armatur nach Anspruch 1, **dadurch gekennzeichnet, dass** die Querschnittsfläche der Auslassöffnung (14) des Gehäuses (2) zumindest näherungsweise gleich groß ist wie die Summe der Querschnittsflächen der beiden Einströmöffnungen (50, 54) des Drehkörpers (4) und / oder der zugeordneten Einlassöffnungen (12) des Gehäuses (2).

3. Armatur nach Anspruch 1 oder 2, **dadurch gekennzeichnet, dass** ein mit dem Drehkörper (4) verbundener Hebel (36) eine Sollbruchstelle (42) aufweist.

4. Armatur nach einem der Ansprüche 1 bis 3, **dadurch gekennzeichnet, dass** die Verbindung eines an der Außenseite des Gehäuses (2) im Bereich der Auslassöffnung (14) angeordneten Anschlusskörpers (18) oder die Verbindung mit einem weiteren Anschlussstück (20), welches insbesondere als T-Stück (20) ausgebildet ist, eine Sollbruchstelle aufweist.

5. Armatur nach einem der Ansprüche 1 bis 4, **dadurch gekennzeichnet, dass** die beiden Einströmöffnungen (50, 54) des Drehkörpers (4) zumindest näherungsweise diametral angeordnet sind und / oder eine gemeinsame Achse (74) aufweisen, welche im wesentlichen orthogonal zur Drehachse (6) des Drehkörpers (4) liegt.

6. Armatur nach einem der Ansprüche 1 bis 5, **dadurch gekennzeichnet, dass** die Sitzringe (80, 82) integrale Bestandteile jeweils einer Buchse (84) sind, welche in den Einlassöffnungen (12) des Gehäuses (2) angeordnet sind.

7. Armatur nach einem der Ansprüche 1 bis 6, **dadurch gekennzeichnet, dass** der Drehkörper (4) eine Ringschulter (92) aufweist, auf welche der von der Außenseite her axial einstellbare Druckring (86) einwirkt.

8. Armatur nach Anspruch 7, **dadurch gekennzeichnet, dass** zwischen dem Druckring (86) und der Ringschulter ein Druckkörper (96) und / oder eine Membrane (90, 91) angeordnet ist, welche radial außen im Gehäuse (2) axial festgelegt ist.

9. Armatur nach einem der Ansprüche 3 bis 8, **dadurch gekennzeichnet, dass** der im Bereich der Außenseite angeordnete Hebel (36) zur Betätigung des Drehkörpers (4) unterhalb des Gehäuses (22) und / oder dessen Unterteils (62) angeordnet ist, und / oder dass der Hebel (36) in einem Freiraum (79) zwischen dem Gehäuse (2) und einem mit diesem verbundenen Anschlusskörper (18) angeordnet ist.

## Claims

1. Fitting for receptacles, such as tank lorries or containers, comprising a housing (2) having two inlet openings (12) and an outlet opening (14), and a rotatable body (4) having a through passage (48) with two inflow openings (50, 54) and an outflow opening (52), the rotatable body (4) being rotatably disposed in the housing (2) to clear the connection between the inlet openings (12) and the outlet opening (14) in an open position, or block it when in a closed position, the two inflow openings (50, 54) having cross-sections which are at least approximately equally large, and the housing (2) having a bearing ring (46) in the vicinity of the second inflow opening (54) or a seat ring (82) in the vicinity of the second inlet opening (12), **characterised in that** the rotatable body (4) is constructed as a plug having a conical outer surface, and a predetermined small annular gap (66) exists between the plug outer surface and the associated conical inner surface of a hole (44) in the housing (2), **in that** the housing (2) either has a seat ring (56), and, more precisely, in the case of the bearing ring (46) in the vicinity of the second inflow opening (54), in the vicinity of the outlet opening (14), against which seat ring the conical outer surface of the rotatable body (4) presses against to form a seal, or the housing (2) has, and, more precisely, in the case of the seat ring (82) in the vicinity of the second inlet opening (12), also in the region of the first inlet opening (12) likewise a seat ring (80), the conical outer surface of the rotatable body (4) pressing against said two seat rings (80, 82), and **in that** an axial adjustment of the rotatable body (4) and consequent adjustment of the sealing force of the seat rings (56; 80; 82) can be predetermined via a clamping ring (34, 86), wherein said adjustment is performable outside of the receptacle after the fitting has been installed in the receptacle.

2. Fitting according to claim 1, **characterised in that** the outlet opening (14) of the housing (2) has a cross-sectional area which is at least approximately as large as the sum of cross-sectional areas of the two inflow openings (50, 54) of the rotatable body (4) and/or of the associated inlet openings (12) of the housing (2).

3. Fitting according to either claim 1 or claim 2, **characterised in that** a lever (36) connected to the rotatable body (4) has a predetermined breaking point (42).

4. Fitting according to any one of claims 1 to 3, **characterised in that** the connection of a connection body (18) positioned exteriorly of the housing (2) in the vicinity of the outlet opening (14), or the connection to a further connection piece (20), which, in particular, is constructed as a T-piece (20), has a predetermined breaking point.

5. Fitting according to any one of claims 1 to 4, **characterised in that** the two inflow openings (50, 54) of the rotatable body (4) are positioned at least approximately diametrically opposite each other and/or have a common axis (74) which is located substantially orthogonal to the rotational axis (6) of the rotatable body (4).

6. Fitting according to any one of claims 1 to 5, **characterised in that** the seat rings (80, 82) are each integral components of bushings (84), which are positioned in the inlet openings (12) of the housing (2).

7. Fitting according to any one of claims 1 to 6, **characterised in that** the rotatable body (4) has an annular shoulder (92), on which the axially adjustable clamping ring (86) acts from the outside.

8. Fitting according to claim 7, **characterised in that** a clamping body (96) and/or a membrane (90, 91), which is axially fixed radially on the outside in the housing (2), is positioned between the clamping ring (86) and the annular shoulder.

9. Fitting according to any one of claims 3 to 8, **characterised in that** the lever (36), arranged in the vicinity of the outside, for actuating the rotatable body (4) is arranged under the housing (22) and/or its lower part (62) and/or **in that** the lever (36) is arranged in a free space (79) between the housing (2) and a connection body (18) connected thereto.

## Revendications

1. Robinetterie pour des récipients tel que des camions-citernes ou des conteneurs, comprenant un boîtier (2) qui présente deux ouvertures d'entrée (12) et une ouverture de sortie (14), ainsi qu'un corps rotatif (4) avec un passage (48), qui présente deux ouvertures d'entrée (50, 54) et une ouverture de sortie (62), le corps rotatif (4) état monté rotatif dans le boîtier (2) afin de libérer la liaison entre les ouvertures d'entrée (12) et l'ouverture de sortie (14) dans une position ouverte ou de l'obstruer dans une position fermée, les sections des deux ouvertures d'entrée (50, 54) étant de plus, au moins approximativement, aussi grandes et le boîtier (2) présentant une bague (46) de palier au niveau de la deuxième ouverture d'entrée (54) ou une bague (82) de siège au niveau de la deuxième ouverture d'entrée (12),
***caractérisée en ce que*** le corps rotatif (4) est conformé en boisseau avec une surface extérieure conique, une petite fente annulaire prédéterminée (66) étant présente entre cette surface extérieure et la surface intérieure conique associée d'un perçage (44) du boîtier (2),
***en ce que*** le boîtier (2) présente soit, à savoir dans le cas de la bague de palier (46) au niveau de la deuxième ouverture d'entrée (54), au niveau de l'ouverture de sortie (14) une bague (56) de siège sur laquelle le corps rotatif (4) s'appuie de manière hermétique avec sa surface extérieure, soit le boîtier (2), dans le cas de la bague (82) de siège au niveau de la deuxième ouverture d'entrée (12), présente de plus une bague (80) de siège au niveau de la première ouverture d'entrée (12) également, le corps rotatif (4) s'appuyant hermétiquement avec sa surface extérieure conique contre lesdites deux bagues (80, 82) de siège,
et ***en ce que,*** de plus, le réglage axial du corps rotatif(4) et ainsi le réglage de la force d'étanchéité des bagues (56 ; 80, 82) de siège peut être imposé par l'intermédiaire d'une bague (34, 86) de pression, ledit réglage pouvant se faire au niveau de la surface extérieure du récipient après le montage de la robinetterie dans le récipient.

2. Robinetterie selon la revendication 1, ***caractérisée en ce que*** la surface de section de l'ouverture de sortie (14) du boîtier (2) est au moins approximativement aussi grande que la somme des surfaces de section des deux ouvertures d'entrée (50, 54) du corps rotatif (4) et/ou des ouvertures d'entrée (12) associées du boîtier (2).

3. Robinetterie selon la revendication 2, ***caractérisée en ce qu***'un levier (36) relié au corps rotatif (4) présente une zone de rupture imposée (42).

4. Robinetterie selon l'une quelconque des revendications 1 à 3, ***caractérisée en ce que*** la liaison d'un corps de raccordement (18) placé sur la face extérieure du boîtier (2) au niveau de l'ouverture de sortie (14) ou la liaison avec un autre élément de raccordement (20), qui est conformé en particulier en élément (20) en T, présente une zone de rupture imposée.

5. Robinetterie selon l'une quelconque des revendications 1 à 4, ***caractérisée en ce que*** les deux ouvertures d'entrée (50, 54) du corps rotatif sont en position au moins approximativement diamétrale et/ou présentent un axe commun (74), qui s'étend pour l'essentiel perpendiculairement à l'axe de rotation (6) du corps rotatif (4).

6. Robinetterie selon l'une quelconque des revendications 1 à 5, ***caractérisée en ce que*** les bagues (80, 82) de siège font partie intégrante à chaque fois d'une douille (84), lesquelles sont placées dans les ouvertures d'entrée (12) du boîtier (2).

7. Robinetterie selon l'une quelconque des revendications 1 à 6, ***caractérisée en ce que*** le corps rotatif (4) présente un épaulement annulaire (92) sur lequel agit la bague de pression (86) réglable axialement depuis l'extérieur.

8. Robinetterie selon la revendication 7, ***caractérisée en ce qu***'entre la bague de pression (85) et l'épaulement annulaire est placé un corps de pression (96) et/ou une membrane (90, 91), qui est fixé axialement à l'extérieur radialement dans le boîtier (2).

9. Robinetterie selon l'une quelconque des revendications 3 à 8, ***caractérisée en ce que*** le levier (36) placé au niveau de la face extérieure pour actionner le corps rotatif (4) est placé sous le boîtier (33) et/ou sa partie inférieure (62), et/ou ***en ce que*** le levier (36) est placé dans un interstice (79) entre le boîtier (2) et un corps de raccordement (18) relié à celui-ci.
